# EUROPÄISCHE PATENTSCHRIFT

(11) **EP 0 320 608 B1**
(45) Veröffentlichungstag und Bekanntmachung des Hinweises auf die Patenterteilung: **31.08.1994**
(21) Anmeldenummer: 88118129.1
(22) Anmeldetag: 31.10.1988
(51) Int. Cl.: F16F 1/36, F16F 9/49

(54) **Stossdämpferfeder**
Spring for a damper
Ressort pour amortisseur

(30) Priorität: 09.12.1987 DE 3741731
(43) Veröffentlichungstag der Anmeldung: 21.06.1989
(73) Patentinhaber: WOCO Franz-Josef Wolf & Co., D-63628 Bad Soden-Salmünster (DE)
(72) Erfinder: Wolf, Franz Josef, D-6483 Bad Soden-Salmünster (DE); Pletsch, Hubert, D-6483 Bad Soden-Salmünster (DE)
(74) Vertreter: Jaeger, Klaus, Dr.

(56) Entgegenhaltungen:
- EP-A- 0 092 066
- EP-A- 0 187 888
- DE-A- 3 101 165
- FR-A- 2 188 736
- FR-A- 2 537 061
- FR-A- 2 537 061
- FR-A- 2 539 836
- PATENT ABSTRACTS OF JAPAN, Band 10, Nr. 315 (M-529)[2371], 25. Oktober 1986;& JP-A-61 124 740 (KINUGAWA RUBBER IND. CO. LTD) 12-06-1986

## Beschreibung

Die Erfindung betrifft eine Stoßdämpferfeder aus Gummi der im Oberbegriff des Anspruchs 1 genannten Art.

Insbesondere betrifft die Erfindung eine Stoßdämpferfeder aus Gummi, die zumindest im wesentlichen und im großen und ganzen eine zylindrische Außenkontur aufweist. "Zylindrisch" in diesem Sinne bezieht sich dabei zunächst mehr auf die Form der Umhüllenden als auf die tatsächliche Detailform der Stoßdämpfer-Gummifeder. So lange diese Gummifeder um eine längere Zentralachse rotationssymmetrisch, zumindest drehsymmetrisch, konfiguriert ist, soll sie im Rahmen der vorliegenden Beschreibung unter dem hier abkürzend verwendeten Begriff "zylindrisch" subsumierbar sein. Weiterhin sollen auch jene Stoßdämpfer-Gummifedern als "zumindest angenähert zylindrisch" angesprochen werden, bei denen die Umhüllende statt die Form eines streng geometrischen Zylindermantels die Form eines mäßig geneigten Kegelmantels aufweist.

Darüber hinaus ist all diesen so verstandenen zylindrischen Gummifedern gemeinsam, daß sie eine durchgehende beiseitig offene zentrale Bohrung mit einem relativ weiten lichten Querschnitt aufweisen, der der Aufnahme einer Führungs- und Stabilisierungsstange dient, die ihrerseits fest mit dem Stoßdämpfersystem oder der Aufhängung des Systems verbunden ist. Durch diese Stabilisierungsstange wird vor allem verhindert, daß die Gummifeder nach Überschreiten einer bestimmten Grenzlast nach Art einer Knickfeder ausknickt. Die gebräuchlicherweise solcherart aufgebauten und für Stoßdämpfer im Kraftfahrzeugbau verwendeten Gummifedern, seien sie nun innerhalb der Spiralfeder der Aufhängung oder aufgesetzt auf dem Kopf dieser Feder eingesetzt, verhalten sich dadurch wie Vollgummipuffer.

Auch die aus FR-A-2 537 061 bekannte Stoßdämpferfeder zeigt einen ebensolchen Grundaufbau. Ihr Außenmantel weist zudem eine axiale Folge radialer ringnutartiger Einschnitte auf, die axial auf einer Seite durch eine in der Radialebene liegende Kreisringfläche begrenzt sind. Eine auftretende Belastung bewirkt bei dieser Stoßdämpferfeder jedoch zunächst keine Kompression des Elastomermaterials, sondern lediglich eine Biegeverformung der Rippen, die sie sukzessive aufeinander zur Anlage bringt. Nach vollständiger Paketierung der Rippen ist ein praktisch massiver Gummikörper entstanden, der zu einem plötzlichen progressiven Anstieg der Federkennlinie führt.

Im Kraftfahrzeugbau dienen solcherart aufgebaute Stoßdämpfer-Gummifedern dem abfedernden und reibungsdämpfenden Abfangen von Stößen, die über den nutzbaren Federweg der Tragfeder des Aufhängungssystems hinausgehen oder über diesen hinauszugehen drohen.

Das Problem dieser bekannten Stoßdämpferfedern liegt darin, daß die zu diesem Zweck erforderlichen und eingesetzten Gummipuffer eine viel zu stark progressiv verlaufende, d.h. eine viel zu steife Federkennlinie aufweisen. Mit anderen Worten, trotz des im Stoßdämpfersystem vorgesehenen Gummipuffers macht sich ein Durchschlag in einer mit einem solchen Stoßdämpfer abgefederten und gedämpften Aufhängung noch immer als dumpfer Schlag im aufgehängten System bemerkbar.

Der Erfindung liegt daher die Aufgabe zugrunde, eine Stoßdämpferfeder aus Gummi der vorstehend erläuterten Art zu schaffen, die vor dem abschließenden steilen und stark progressiven, als Anschlag für den Durchschlag dienenden Ast der Kennlinie einen weiten Einschwingbereich mit ausgeprägt weich verlaufender Kennlinie aufweist.

Gelöst wird diese Aufgabe gemäß der Erfindung durch eine Gummifeder gemäß Anspruch 1, die die dort im kennzeichnenden Teil genannten Merkmale aufweist.

Ausgestaltungen der Erfindung sind Gegenstand der Unteransprüche.

Der Grundgedanke der Erfindung liegt zunächst also darin, den als Stoßdämpferfeder dienenden zylindrischen Gummipuffer auf dessen Außenmantelfläche mit ringnutartigen Einschnitten zu versehen, deren Tiefe, über den Gesamtdurchmesser der Gummifeder betrachtet, vorzugsweise in der Größenordnung von zwei halben Radien liegt. Diese ringnutartigen Einschnitte der Gummifeder sind dabei mit untereinander gleicher Ausrichtung axial auf einer Seite durch eine in der Radialebene liegende Kreisringfläche und auf ihrer axial anderen Seite durch eine kuppelartige Zonenfläche, die radial außen auf die Umhüllende der Gummifeder, im Axialprofil tangential, ausläuft, begrenzt. Diese Einschnitte sind dabei vorzugsweise so dimensioniert, daß mindestens ein ringnutartiger Einschnitt, vorzugsweise zwei bis zehn, insbesondere drei, vier oder fünf solcher ringnutartigen Einschnitte auf der gesamten axialen Höhe der Gummifeder, axial gleichmäßig verteilt, angeordnet sind.

Bei dieser geometrischen Ausbildung der Stoßdämpferfeder wird erreicht, daß sich die Feder zu Beginn der Lasteinwirkung im Bereich der ringnutartigen Einschnitte zunächst stark verformt, und erst dann, nach dem Zusammendrücken der ringnutartigen Einschnitte, verpreßt wird. Dies führt dazu, daß die Gummifeder im Verformungsbereich einen relativ flachen Verlauf der Kennlinie, und im anschließenden Verpressungsbereich den benötigten steilen Anstieg der Federkennlinie zeigt. Dabei wird durch die Kombination der Kreisringfläche mit der kuppelartigen Zonenfläche bei der Nutprofilierung ein gleichsam stapelbildendes Ineinanderschieben der Federzonensegmente erreicht, das zu,einer Zentrierung und Stabilisierung auch axial langer Federn führt. Durch diesen Zentrierungs- und Stabilisierungseffekt wird vor allem bei Gummifedern, die in den Spiralfedern eines Stoßdämpfersystems angeordnet sind, der Verschleiß durch Arbeiten an der Innenwandfläche der Spiralfeder wirksam vermindert.

Nach einer Ausgestaltung der Erfindung kann dieser Stabilisierungseffekt dadurch verbessert werden, daß die Kreisringfläche jeweils eines Einschnitts radial den außenliegenden Auslaufrand der Zonenfläche des jeweils benachbarten Einschnitts hinterschneidend mit kleinerem Außendurchmesser als dieser Auslaufrand hinter diesen unter Bildung eines peripheren Wulstringes axial zurückspringt. Der so gebildete auf dem Außenrand der Kreisringfläche umlaufende Wulstring stützt sich bei zusammengedrückter Ringnut auf der Zonenfläche der axial gegenüberliegenden Begrenzungswand der Ringnut ab.

Durch eine weitere Ausgestaltung der Erfindung kann dieser durch die Verformung der Gummifeder erzeugte Versteifungs- und Stabilisierungseffekt dadurch weiter gesteigert werden, daß der Außendurchmesser des außenliegenden Auslaufrandes der Zonenflächen in axialer Folge der Zonenflächen in Richtung vom Kopf zum Fuß der Gummifeder von Zonenfläche zu Zonenfläche stetig kleiner bemessen ist. Dadurch wird das Aufsitzen des jeweils über einem Segment sitzenden nächsten Segments erleichtert und verfestigt, und zwar jeweils auch dann, wenn die einzelnen Segmente der Gummifeder wieder bereits unter Wulstbildung nach radial außen kräftig verformt sind.

Zur Verbesserung der Dämpfungseigenschaften der als Durchschlag-Zusatzfeder dienenden Stoßdämpferfeder gemäß der Erfindung ist deren Fuß vorzugsweise als Luftkissenfeder ausgebildet, die von der zentralen Bohrung der Gummifeder durchsetzt ist. Dabei weist der Außenrand dieser Gummifeder vorzugsweise einen Wulst auf, der der Fußbefestigung der Gummifeder im Stoßdämpfer dient.

Die vorstehend beschriebene äußere Formgestaltung der Stoßdämpferfeder bewirkt, daß die zugehörige Federkennlinie einen zunächst sehr weich einsetzenden und dann auch über einen relativ weiten Bereich weich verlaufenden Abschnitt aufweist. Nach dem Zusammendrücken der äußeren ringnutartigen Einschnitte der Gummifedern verhält sich diese dann im wesentlichen ebenso wie ein vorgespannter Vollgummipuffer, zeigt also einen ausgesprochen steilen Anstieg der Federkennlinie. Dabei ist zwischen dem anfänglichen ausgesprochen flachen Abschnitt der Federkennlinie und dem steilen Abschnitt der Federkennlinie im Kompressionsbereich ein relativ kurzer Übergangsbereich ausgebildet. Um auch diesen Übergang weicher und fließender auszugestalten, ist die Stoßdämpferfeder vorzugsweise so ausgebildet, daß der gesamte Gummifederkörper bis auf den gegebenenfalls als Luftkissenfeder ausgebildeten Fußbereich in gleichmäßiger räumlicher Verteilung mit kugelförmigen Hohlräumen durchsetzt ist. Die Anordnung dieser kugelförmigen Hohlräume ist am besten durch die sogenannten Gitterplätze eines kubisch innen zentrierten Gitters beschrieben. Dabei ist dieses geometrische Anordnungsgitter koaxial zum Gummifederkörper ausgerichtet. Die so angeordneten Hohlräume sind schichtweise mit jeweils zueinander parallelen zylindrischen Kanälen, die untereinander in ebenen Scharen solcher Kanäle verteilt sind, derart durchsetzt, daß die Kanalscharen in der Radialebene der Gummifeder liegen und sich räumlich übereinanderliegend unter 90° überkreuzen, ohne sich zu schneiden. Jeder der Kanäle ist so angeordnet, daß er jeweils auf einer der [100] Richtungen des Gitters liegt, und zwar in der Weise, daß die Mittelachsen der Kanäle jeweils durch die Mittelpunkte aller kugelförmigen Hohlräume auf den jeweiligen Kanal verlaufen.

Selbstverständlich können im Gummifederkörper gemäß der Erfindung auch anders verteilte Hohlräume und Kanäle vorgesehen sein, um den Übergangsbereich zwischen den beiden Abschnitten der Federkennlinie weicher verlaufen zu lassen. Das vorstehend beschriebene Verteilungsmuster weist jedoch zusätzlich zu seiner schwingungstechnischen Eigenschaft, einen außerordentlich weichen und fließenden Übergang zwischen dem weichen und im wesentlichen linearen Anfangsbereich und dem steilen progressiven Anschlagbereich zu gewährleisten, den Vorteil einer außerordentlich guten akustischen Entkopplung zwischen dem Kopfteil und dem Fußteil der Gummifeder auf. Bei entsprechender konstruktiver Anordnung kann eine solcherart mit Hohlkanälen und Hohlkörpern durchsetzte Stoßdämpferfeder aus Gummi zusätzlich entscheidend zur Dämpfung der Fahrgeräusche in der Fahrgastzelle eines Kraftfahrzeugs beitragen.

Dabei kann diese akustisch dämpfende Eigenschaft selbst dann wirksam genutzt werden, wenn die Stoßdämpfer-Gummifeder in ihrer zentralen Bohrung mit einer Führungsstange durchsetzt ist. Dabei kann nicht nur die Reibung zwischen dem Gummifederblock und einer solchen Führungsstange vermindert, sondern auch der Übergang von Körperschall aus der Führungsstange in den Gummifederblock und umgekehrt, aus dem Gummifederblock in die Führungsstange dadurch vermindert werden, daß in der zentralen Bohrung des Gummifederblocks eine axiale Folge von flachen Ringnuten mit zumindest im wesentlichen Kreisbogenprofil in so dichter Anordnung ausgebildet ist, daß die jeweils zwischen zwei benachbarten Ringnuten stehenbleibende Zwischenwand als mehr oder minder scharfkantiges, nach radial innen vorspringendes lippenartiges Ringprofil ausgebildet ist, bzw. in Erscheinung tritt.

Die Erfindung ist im folgenden anhand eines Ausführungsbeispiels in Verbindung mit den Zeichnungen näher erläutert. Es zeigen:
- Fig. 1: eine Stoßdämpferfeder aus Gummi im Axialschnitt; und
- Fig. 2: die Federkennlinie der in Fig. 1 gezeigten Gummifeder.

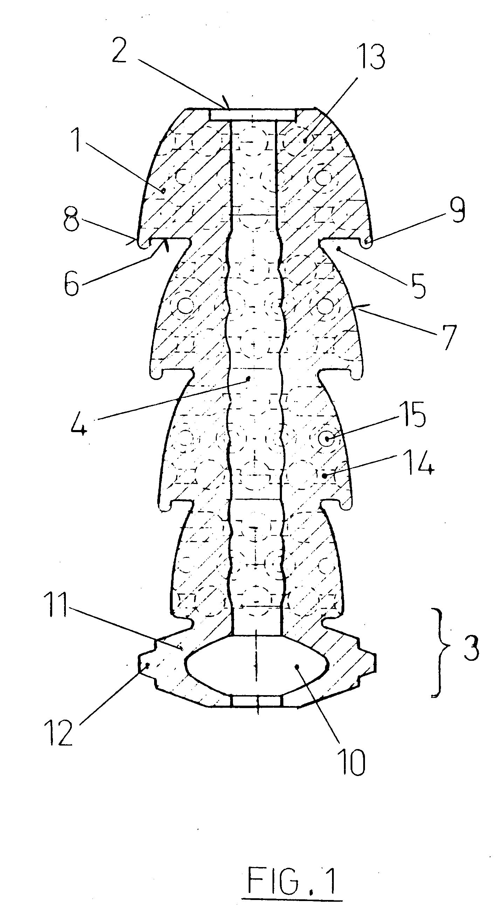

Die in der Fig. 1 im Axialschnitt gezeigte Stoßdämpferfeder besteht aus einem Gummifederkörper 1 mit einer sich vom Kopfteil 2 zum Fußteil 3 schwach konisch verjüngenden, insgesamt zumindest im wesentlichen angenähert zylindrischen Gestalt. Der Gummifederkörper 1 weist zentralaxial eine durchgehende Bohrung 4 auf, die der Aufnahme einer in der Figur nicht dargestellten Führungsstange dient.

Auf ihrem Außenumfang weist die Stoßdämpferfeder eine axiale Folge radialer ringnutartiger Einschnitte 5 im Außenmantel des Elastomerblocks auf, wobei diese Einschnitte mit untereinander gleicher Ausrichtung axial auf einer Seite durch eine in der Radialebene liegende Kreisringfläche 6 und auf der axial gegenüberliegenden Seite durch eine kuppelartige Zonenfläche 7, die auf die Umhüllende der Gummifeder ausläuft, begrenzt sind.

Die Kreisringfläche 6 jeweils eines Einschnitts 5 hinterschneidet in radialer Richtung gesehen mit kleineren Außendurchmessern den radial außenliegenden Auslaufrand 8 unter Bildung eines peripheren Wulstringes 9. Dabei ist der größte Außendurchmesser der durch die Zonenflächen gebildeten Segmente der Gummifeder, d.h. also die axiale Folge der Außendurchmesser der peripher außenliegenden Auslaufränder 8 der Zonenfläche, so bemessen, daß er in Richtung vom Kopf 2 zum Fuß 3 des Gummifederblocks 1 von Zonenfläche zu Zonenfläche stetig kleiner wird. Dadurch wird in der aus Fig. 1 gut erkennbaren Weise beim Zusammendrücken der Feder ein sicheres stapelnden Aussetzen und Ineinanderschieben der einzelnen durch die Zonenflächen 7 definierten Segmente der Gummifeder erzielt. Bei diesem Vorgang wirken die am Außenrand der Kreisringflächen 6 ausgebildeten Wulstränder 9 zusätzlich im Sinne einer Stabilisierung gegen axiales Ausknicken der Gummifeder.

Um bei stoßartig auftretender Belastung der Gummifeder eine stärker gedämpfte Auswirkung der Lasteinwirkung auf die Stoßdämpferfeder zu erzielen, ist der Fuß 3 der Gummifeder als Luftkissenfeder 10 ausgebildet, die von der zentralen Bohrung 4 der Gummifeder durchsetzt ist. Der solcherart ausgebildete Gummifederkörper 11 weist einen peripher umlaufenden angeformten Wulstring 12 nach Art eines Außenflansches auf, der dem Einspannen und der Befestigung der Stoßdämpferfeder im Stoßdämpfersystem, das hier nicht dargestellt ist und von konventioneller Art sein kann, dient.

In dem Elastomerblock 1 der Stoßdämpferfeder sind in gleichmäßiger, aber nicht homogener Verteilung kugelförmige Hohlräume 13 ausgebildet. Diese kugelförmigen Hohlräume 13 sind in der Radialebene des zylindrischen Gummifederkörpers schichtweise und derart gegeneinander versetzt angeordnet, daß sie in kubisch-raumzentriertes Gitter bilden. Als zweckmäßig und vorteilhaft hat sich dabei erwiesen, im Bereich des kleinsten Innenradius der Kreisringflächen 6, also im Bereich der durch die "Sohle" des ringnutartigen Einschnitts 5 definierten Radialebene keine solchen kugelförmigen Hohlräume anzuordnen. Dadurch wird nicht nur im Bereich der Zentralbohrung 4 eine etwas erhöhte mechanische Festigkeit zur Verfügung gestellt, sondern auch gewissermaßen ein Steuerbereich erstellt, der das Aufsitzen der einzelnen Segmente des Gummifederblocks aufeinander durch eine leitende Steuerung der Verformung lenkt.

Der Gummifederkörper 1 ist weiterhin von Scharen jeweils untereinander innerhalb einer Schar zueinander paralleler zylindrischer Kanäle 14,15 durchsetzt, die sich im Raum übereinanderliegend kreuzen, ohne sich zu schneiden. Diese zylindrischen Hohlkanäle sind dabei relativ zu den kugelförmigen Hohlkörpern so angeordnet und ausgerichtet, daß sie auf den Kanten des Gitters, und zwar auf den in der Radialebene des zylindrischen Gummifederkörpers liegenden Kanten des Verteilungsgitters der kugelförmigen Hohlkörper,liegen, also mit ihrer langen Zentralachse die Mittelpunkte der kugelförmigen Hohlkörper durchsetzen. Auch bei dieser Anordnung der zylindrischen Hohlkanäle ist der jeweils durch die Ringsohle des ringnutartigen Einschnitts 5 definierte Taillenbereich des Gummifederkörpers frei von Hohlkanälen, und zwar aus dem gleichen Grund und zu dem gleichen Zweck wie vorstehend im Zusammenhang mit den kugelförmigen Hohlkörpern beschrieben, die für diesen Bereich ebenfalls ausgespart sind.

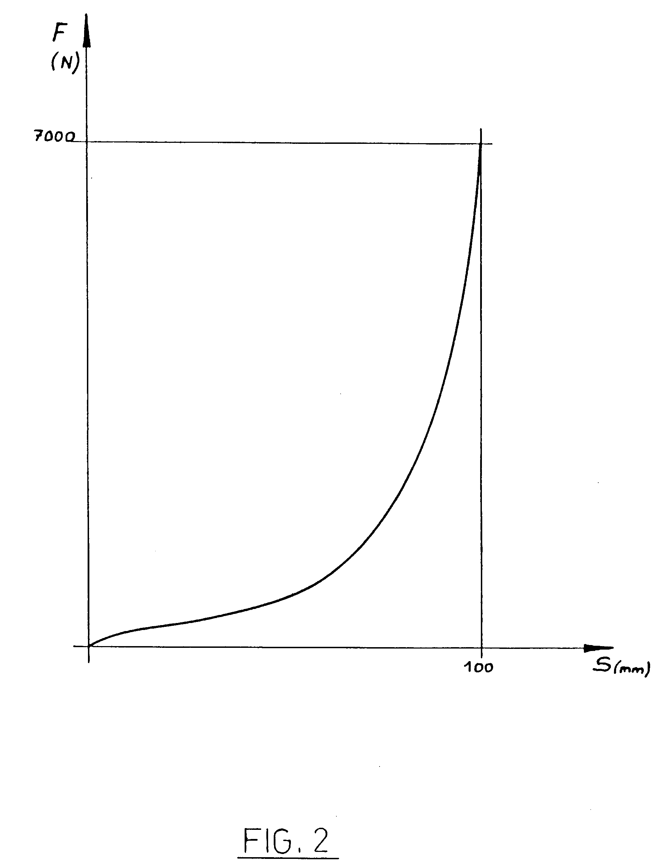

Die für eine Stoßdämpferfeder der in Fig. 1 gezeigten Art gemessene Federkennlinie ist in der Fig. 2 dargestellt. Auf der Abszisse des Diagramms ist der Federweg in Millimetern, auf der Ordinate die in axialer Richtung, also quer zu den Schichten der Kanalscharen, einwirkende Kraft in Newton, aufgetragen.

Zu Beginn der Nutzlasteinwirkung, also zu Beginn der Einwirkung einer die Gummifeder verformenden Kraft F verläuft die Federkennlinie nach einem Einsatzbereich nahezu linear und auffallend weich. An diesen Anfangsbereich schließt sich ein weicher aber ständig progressiver werdender Übergangsbereich, der schließlich in den steilen, anschlagartigen Ast der Federkennlinie übergeht. Dieser Verlauf der Kennlinie spiegelt das mit der Stoßdämpferfeder gemäß Figur 1 angestrebte Federverhalten wieder, daß nämlich zu Beginn eines auf die Feder einwirkenden Durchschlages, beispielsweise einer Radaufhängug, die abfedernde und dämpfende Wirkung der Gummifeder außerordentlich weich, sozusagen unmerklich, einsetzt und dann ohne abrupte Sprünge in ein Anschlagpufferverhalten übergeht. Während zu Beginn ein mehr oder minder gemeinsames Verformen sowohl der äußeren als auch der inneren Einschnitt- und Hohlraumkonturen den Kennlinienverlauf bestimmt, ist der steile Ast durch eine Kompressionsverformung bestimmt, wie sie für Vollgummipuffer typisch ist. Im Bereich dieses steil progressiven Kennlinienastes am äußeren rechten Rand des in Fig. 2 dargestellten Ausschnitts der Kennlinie sind sämtliche in der Elastomermatrix ausgebildeten Hohlkanäle und die meisten kugelförmigen Hohlräume sowie die ringnutartigen Einschnitte zumindest im wesentlichen vollständig zusammengepreßt und tritt eine Kompression des Gesamtkörpers unter tonnenförmiger Verformung nach radial auswärts ein.

## Patentansprüche

1. Stoßdämpferfeder aus Gummi von zumindest angenähert zylindrischer Gestalt mit einer durchgehenden zentralen Bohrung (4) zur Aufnahme einer Führungsstange, wobei der Gummifederkörper (1) im Aussenmantel eine axiale Folge radialer ringnutartiger Einschnitte (5) aufweist, die mit untereinander gleicher Ausrichtung axial auf einer Seite durch eine in der Radialebene liegende Kreisringfläche (6) begrenzt sind,
dadurch **gekennzeichnet**,
daß die ringnutartigen Einschnitte (5) auf der axial anderen Seite durch eine kuppelartige Zonenfläche (7), die auf die Umhüllende des Gummifederkörpers (1) ausläuft, begrenzt sind und die Kreisringfläche (6) jeweils eines Einschnitts (5) radial den außenliegenden Auslaufrand (8) der Zonenfläche (7) des jeweils benachbarten Einschnitts hinterschneidend mit kleinerem Außendurchmesser als dieser Auslaufrand (8) hinter diesen unter Bildung eines peripheren Wulstringes (9) axial zurückspringt.

2. Stoßdämpferfeder mit auflastseitigem Kopf (2) und widerlagerseitigem Fuß (3) nach einem der Ansprüche 1 oder 2,
dadurch **gekennzeichnet**,
daß der Außendurchmesser des außenliegenden Auslaufrandes (8) der Zonenflächen (7) in axialer Folge der Zonenflächen (7) in Richtung vom Kopf (2) zum Fuß (3) der Gummifeder von Zonenfläche (7) zu Zonenfläche (7) stetig kleiner bemessen ist.

3. Stoßdämpferfeder nach einem der Ansprüche 1 oder 2,
dadurch **gekennzeichnet**,
daß der Fuß (3) der Gummifeder als Luftkissenfeder (10) ausgebildet ist, die von der zentralen Bohrung (4) der Gummifeder durchsetzt ist.

4. Stoßdämpferfeder nach Anspruch 3,
dadurch **gekennzeichnet**,
daß in der Radialebene um die Luftkissenfeder (10) herum ein als Einspannring und/oder Haltering dienender Wulstring (12) ausgebildet isst.

5. Stoßdämpferfeder nach einem der Ansprüche 1 bis 4,
dadurch **gekennzeichnet**,
daß der gesamte Gummifederkörper (1) bis auf den insbesondere als Luftkissenfeder (10) ausgebildeten Fuß (3) in gleichmäßiger räumlicher Verteilung mit kugelförmigen Hohlräumen (13) durchsetzt ist, die auf den Gitterplätzen eines kubisch innenzentrierten Gitters angeordnet sind, das seinerseits koaxial zum Gummifederkörper (1) ausgerichtet ist, wobei die Hohlräume (13) schichtweise mit jeweils zueinander parallele zylindrische Kanäle (14,15) umfassenden ebenen Scharen von Kanälen derart durchsetzt sind, daß die Kanalscharen in der Radialebene der Gummifeder liegen und sich räumlich übereinanderliegend unter 90° überkreuzen, ohne sich zu schneiden, und jede Folge von Hohlräumen (13), die auf jeweils einer der Achsen [100] des Gitters liegen, so von jeweils einem Kanal der Kanalschar durchsetzt sind, daß die Mittelpunkte aller dieser Hohlräume (13) auf der Mittelachse des jeweiligen Kanals (14,15) liegen.

6. Stoßdämpferfeder nach einem der Ansprüche 1 bis 5.
dadurch **gekennzeichnet**,
daß in der zentralen Bohrung (4) der Gummifeder eine axiale Folge von flachen Ringnuten mit Kreisbogenprofil in so dichter Anordnung ausgebildet ist, daß die jeweils zwischen zwei benachbarten Ringnuten stehenbleibende Zwischenwand als ein scharfkantiges nach radial innen vorspringendes lippenartiges Ringprofil in Erscheinung tritt.

7. Verwendung der Stoßdämpferfeder nach einem der Ansprüche 1 bis 6 in oder auf der Spiralfeder einer Radaufhängungsfeder oder eines Radaufhängungs-Feder-Dämpfer-Aggregates im Fahrzeugbau.

## Claims

1. Rubber shock absorber spring of at least approximated cylindrical shape with a central through-bore (4) to receive a motion rod, the rubber spring body (1) having an axial sequence of radial ring groove shaped recesses (5) which having among each other the same alignment are delimited axially on one side by a circular ring surface (6) lying in a radial plane,
**characterized** in that
the ring groove shaped recesses (5) on the axially different side are delimited by a dome-shaped zone surface (7), running out on the envelope of the rubber spring body (1) and that the circular ring surface (6) of a recess (5) respectively recoils axially forming a peripheral edge ring (9) radially undercutting the projecting running out edge (8) of the zone surface (7) of the respectively adjacent recess with a smaller outer diameter than this running out edge behind said one edge (8).

2. Shock absorber spring with a load-sided head (2) and abutment-sided foot (3) according to claim 1,
**characterized** in that the outer diameter of the projecting running out edge (8) of the zone surface (7) is dimensioned getting constantly smaller in axial sequence of the zone surface (7) in the direction of head (2) to foot (3) of the rubber spring from zone surface (7) to zone surface (7).

3. Shock absorber spring according to one of claims 1 or 2,
**characterized** in that
the foot (3) of the rubber spring is formed as air cushion spring (10), which is interspersed by the central bore (4) of the rubber spring.

4. Shock absorber spring according to claim 3,
**characterized** in that
in the radial plane around the air cushion spring (10) is formed as an edge ring (12) serving as chucking ring and/or holder ring.

5. Shock absorber spring according to one of claims 1 to 4,
**characterized** in that
the entire rubber spring body (1) except for the foot (3) especially formed as air cushion spring (10) is interspersed by spherically formed cavities (13) in uniform spatial distribution, which are placed on grid places of an inside-centered cubic lattice, which in its turn is arranged coaxially to the rubber spring body (1), the cavities (13) being layerwise interspersed by plane groups of channels with cylindrical channels (14,15) parallel to each other in such a manner that the groups of channels lie in the radial plane of the rubber spring and cross each other under 90° lying spatially above each other and that each sequence of cavities (13), which lie on one of the axes [100] of the grid respectively are interspersed by a channel of the group of channels respectively such, that the midpoints of all of these cavities (13) lie on the middle axis of the respective channel (14,15).

6. Shock absorber spring according to one of claims 1 to 5,
**characterized** in that
an axial sequence of flat ring grooves with a circular arc profile is formed in such a dense arrangement in the central bore (4) of the rubber spring that the partition wall resting between two adjacent ring grooves respectively appears as a sharp edged ring profile projecting radially inwards.

7. Applying the shock absorber spring according to one of claims 1 to 6 in or on a flat spiral spring of a wheel suspension spring or a wheel suspension-spring-absorber-aggregate in the construction of cars or vehicles.

## Revendications

1. Ressort pour amortisseur en caoutchouc, de forme au moins approximativement cylindrique, et muni d'un creux central continu (4) pour recevoir une barre conductrice, le corps du ressort en caoutchouc (1) présentant dans l'enveloppe extérieure une série axiale d'encoches (5) radiales semblables à des rainures et qui sont limitées axialement sur une face, avec le même alignement les unes par rapport aux autres, par une surface en anneau de cercle (6) située dans le plan radial, caractérisé en ce que les encoches (5) semblables à des rainures sont limitées, sur la face axialement différente, par une surface de zone (7) en forme de dôme qui aboutit sur l'enveloppante du corps du ressort (1) et en ce que la surface en anneau de cercle (6) de chaque encoche (5) rejaillit axialement derrière le bord de sortie (8) en formant un anneau à bourrelet périphérique (9) et en contre-dépouillant radialement le bord de sortie (8) extérieur de la surface de zone (7) de chaque encoche voisine, avec un diamètre extérieur inférieur à ce bord de sortie (8).

2. Ressort pour amortisseur muni d'une tête (2) sur le côté de charge et d'un pied (3) sur le côté de butée, selon l'une des revendications 1 ou 2, caractérisé en ce que le diamètre extérieur du bord de sortie extérieur (8) des surfaces de zone (7) qui se suivent de façon axiale, est constamment dimensionné de façon inférieure, de surface de zone (7) à surface de zone (7), dans le sens tête (2) - pied (3) du ressort en caoutchouc.

3. Ressort pour amortisseur selon l'une des revendications 1 ou 2, caractérisé en ce que le pied (3) du ressort en caoutchouc est conçu en tant que ressort à coussin d'air (10) traversé par le creux central (4) du ressort en caoutchouc.

4. Ressort pour amortisseur selon la revendication 3, caractérisé en ce qu'un anneau à bourrelet (12) servant d'anneau de serrage et/ou d'anneau de blocage se trouve dans le plan radial entourant le ressort à coussin d'air (10).

5. Ressort pour amortisseur selon l'une des revendications 1 à 4, caractérisé en ce que l'ensemble du corps du ressort en caoutchouc (1), excepté le pied (3) conçu en particulier en tant que ressort à coussin d'air (10), est traversé d'espaces creux (13) sphériques répartis régulièrement dans l'espace et qui sont disposés sur les grilles d'un treillis centré intérieurement de façon cubique et qui est aligné de façon coaxiale par rapport au corps du ressort en caoutchouc (1), les espaces creux (13) étant traversés de façon superposée par des systèmes de canaux plats comprenant des canaux cylindriques à chaque fois parallèles entre eux (14, 15), de sorte que les systèmes de canaux se trouvent dans le plan radial du ressort en caoutchouc et se croisent à 90° en étant superposés dans l'espace et sans se couper et que chaque série d'espaces creux (13) qui se trouve sur chacun des axes (100) du treillis est traversée à chaque fois par un canal du système de canaux de façon à ce que les points centraux de tous ces espaces creux (13) se trouvent sur la ligne médiane de chaque canal (14, 15).

6. Ressort pour amortisseur selon l'une des revendications 1 à 5, caractérisé en ce que, dans le creux central (4) du ressort en caoutchouc, est conçue une série axiale de rainures plates à profil en arc de cercle, disposées de façon si dense que la paroi intermédiaire qui reste a chaque fois entre deux rainures voisines ressemble à un profil annulaire à angles vifs, en forme de lèvres et qui fait radialement saillie vers l'intérieur.

7. Utilisation du ressort pour amortisseur selon l'une des revendications 1 à 6, dans ou sur le ressort spiral d'un ressort de suspension de roue ou d'un agrégat ressort de suspension de roue - amortisseur, dans la construction automobile.
